(19) Europäisches Patentamt
European Patent Office
Office européen des brevets

(11) **EP 4 644 226 A1**

(12) **EUROPEAN PATENT APPLICATION**

(43) Date of publication:
**05.11.2025 Bulletin 2025/45**

(21) Application number: **24173257.7**

(22) Date of filing: **30.04.2024**

(51) International Patent Classification (IPC):
**B63B 49/00** $^{(2006.01)}$ **G01C 21/20** $^{(2006.01)}$
**B63B 79/40** $^{(2020.01)}$ **B63B 79/30** $^{(2020.01)}$

(52) Cooperative Patent Classification (CPC):
**B63B 49/00; B63B 79/30; B63B 79/40;
G01C 21/203**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB SCHWEIZ AG
5400 Baden (CH)**

(72) Inventors:
• **RAHMAN, Moksadur
72476 Västerås (SE)**
• **FEYZMAHDAVIAN, Hamid
16973 Stockholm (SE)**
• **SHARIFI, Maryam
16364 Spånga (SE)**

(74) Representative: **Kransell & Wennborg KB
P.O. Box 27834
115 93 Stockholm (SE)**

(54) **MOTION PLANNING FOR A MARINE VESSEL**

(57) The present disclosure relates to a method of motion planning for a marine vessel, the method being performed by a processing device (10) on the marine vessel. The method comprises obtaining a planned future route for the marine vessel and calculating vessel position, heading and speed along the planned route, including minimizing the cost function: *Cost Function = w1 × Discomfort + w2 × Time + w3 × Energy,* where *Discomfort = 1/Comfort,* Time is the time it will take the marine vessel to complete the planned route, Energy is the amount of energy, e.g. fuel, the marine vessel will consume to complete the planned route, and w1, w2 and w3 are preset weights. The Comfort is calculated as a function of acceleration and jerk in the surge and sway directions of the marine vessel along the planned route, and is above a preset minimum.

Fig. 2

**Description**

**TECHNICAL FIELD**

The present disclosure relates to motion planning for a marine vessel, e.g. a ship.

**BACKGROUND**

Motion planning is one of building blocks to enable autonomous operation of marine vessels. It deals with the task of computing a sequence of actions that the vessel must take to make progress along a route, or to arrive at a specific target. Minimizing travel time and energy consumption are widely considered in motion planning of marine vessels.
On the other hand, passenger comfort is typically quantified by Motion Sickness Incidence (MSI), which refer to the percentage of seasickness after two hours of voyage and should e.g. be less than 10% for passenger ships. There is no such unified measure available for cargo stability for container ships. However, cargo stability is important in ensuring the safety of the container ship, its crew, and its cargo, as well as the environment. Hence, passenger comfort and cargo stability may also be relevant in motion planning.

**SUMMARY**

It is an objective of the present invention to provide motion planning which also takes account of passenger comfort and/or cargo stability.
The present disclosure relates to a method of motion planning for a marine vessel, the method being performed by a processing device on the marine vessel. The method comprises obtaining a planned future route for the marine vessel and calculating vessel position, heading and speed along the planned route, including minimizing the cost function:

$$Cost\ Function = w1 \times Discomfort + w2 \times Time + w3 \times Energy$$

where Discomfort = 1/Comfort, Time is the time it will take the marine vessel to complete the planned route, Energy is the amount of energy, e.g. fuel, the marine vessel will consume to complete the planned route, and w1, w2 and $w_3$ are preset weights. The Comfort is calculated as a function of acceleration and jerk in the surge and sway directions of the marine vessel along the planned route and is above a preset minimum.
By including a term of discomfort in the cost function, the comfort/discomfort, including cargo stability, is considered when minimizing the cost function for motion planning. Thus, time, energy and comfort/discomfort are all considered, and the weights can be set as desired to prioritize between the three properties. The comfort is calculated as a function of acceleration and jerk in the surge (longitudinal) and sway (lateral) directions of the marine vessel. This does not preclude the comfort to also be calculated as a function of acceleration and/or jerk in the heave (vertical) direction, but motion in the heave direction may be difficult to predict in advance during motion planning.
The planned route may be in the form of consecutive waypoints. The comfort may be calculated at each of the waypoints, and an average comfort/discomfort over all or some of the waypoints may then be used in the cost function. Additionally or alternatively, an upper limit may be set for the discomfort, which limit should not be exceeded at any one of the waypoints, or which limit should not be exceeded at more than a preset number of the waypoints.
It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.
Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

**BRIEF DESCRIPTION OF THE DRAWINGS**

Embodiments will be described, by way of example, with reference to the accompanying drawings, in which:

Fig 1 illustrates degrees of freedom of a marine vessel, with linear and rotational movement in three dimensions, in accordance with some embodiments of the present invention.

Fig 2 is a schematic block diagram of a processing device which may interact with a user and/or a control system, in accordance with some embodiments of the present invention.

Fig 3 is a schematic flow chart of a method, in accordance with some embodiments of the present invention.

## DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

"Jerk" (also called jolt), as discussed herein, is the rate of change of the vessel's acceleration over time. It is a vector quantity (having both magnitude and direction). The jerk can be expressed as the first time derivative of acceleration, the second time derivative of velocity, and the third time derivative of position, and may thus typically be expressed in $m/s^3$. It has been realized that jerk is an important factor in passenger comfort, for reducing motion sickness or discomfort, as well as for cargo stability.

"Voyage planning", also known as passage planning, is an extensive dock to dock plan, that may strategically take advantage of for instance favourable weather conditions, the prevailing currents, e.g. the Gulf Stream or Kuroshio Current, to reduce fuel consumption while also avoiding potential hazardous weather.

"Path planning" is another important aspect of autonomous ship navigation, used to find a collision-free path that is dynamically feasible. Typically, there are two types of path planning, global and local. Global path planning is used to find dynamically feasible path from the starting point to the end point by considering static obstacles, while local path planning is the dynamic adjustment made by ships when navigating along the globally planned path by considering both static and dynamic obstacles.

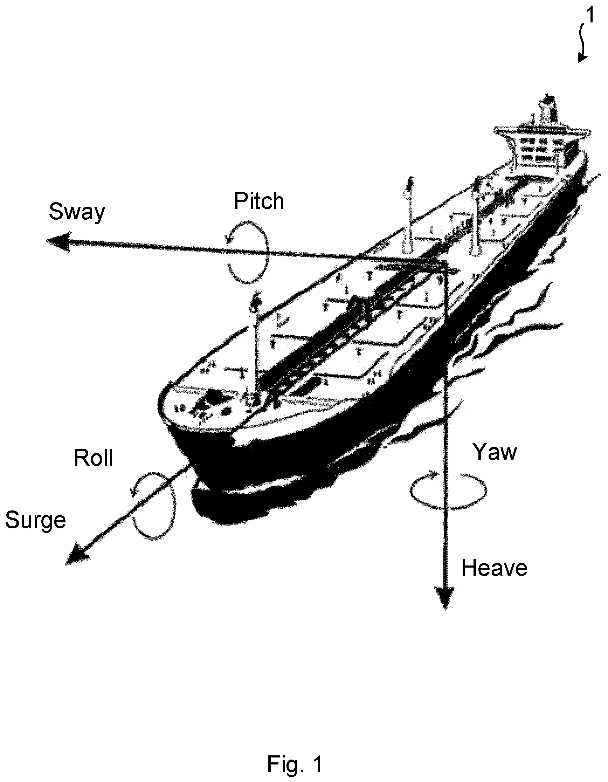

Figure 1 illustrates degrees of freedom of motion of a marine vessel 1, here a ship in the form of a tanker. There are three linear degrees of freedom of motion, in the surge (longitudinal), sway (lateral) and heave (vertical) directions, and three rotational degrees of freedom of motion, in the form of roll (about an axis in the surge direction), pitch (about an axis in the sway direction) and yaw (about an axis in the heave direction). The present invention is primarily related to linear movement in the surge and sway directions. Movement in the other degrees of freedom may not be predicted in advance and e.g. roll may be handled by stability controllers.

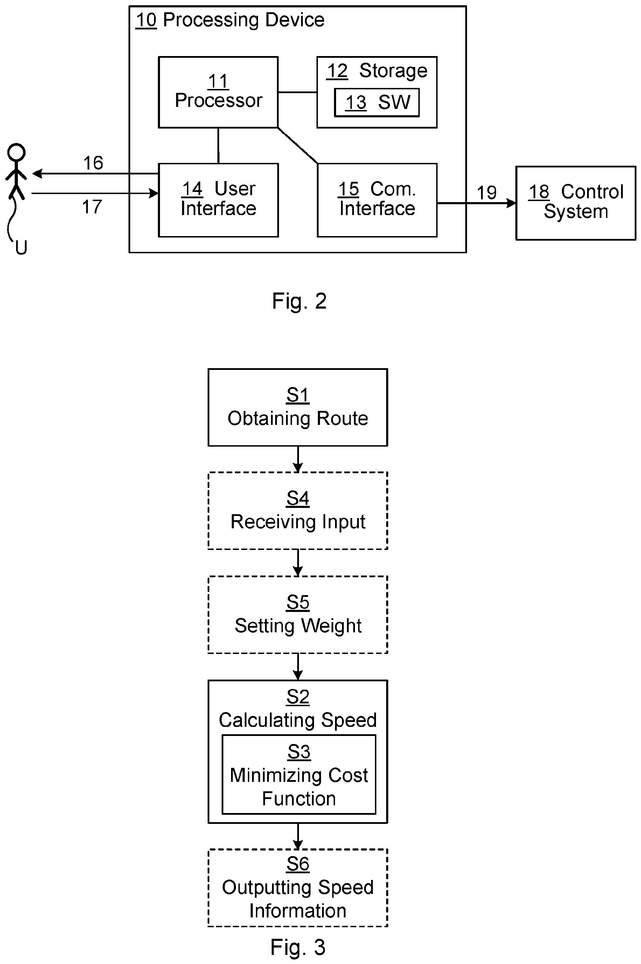

Figure 2 illustrates a processing device 10, typically at least partly located on (also in) the marine vessel 1. The processing device 10 comprises processing circuitry 11 e.g. a central processing unit (CPU). The processing circuitry 11 may comprise one or a plurality of processing units in the form of microprocessor(s). However, other suitable devices with computing capabilities could be comprised in the processing circuitry 11, e.g. an application specific integrated circuit (ASIC), a field programmable gate array (FPGA) or a complex programmable logic device (CPLD). The processing circuitry 11 is configured to run one or several computer program(s) or software (SW) 13 stored in a storage 12 of one or several storage unit(s) e.g. a memory. The storage unit is regarded as a computer readable means, forming a computer program product together with the SW 13 stored thereon as computer-executable components, and may e.g. be in the form of a Random Access Memory (RAM), a Flash memory or other solid state memory, or a hard disk, or be a combination thereof. The processing circuitry 11 may also be configured to store data in the storage 12, as needed. The processing device 10 may be any suitable device, e.g. a general or special purpose computer, which is at least partly located on the marine vessel 1. However, parts of the processing device 10, e.g. all or part of the processing circuitry 11 and/or the storage 12 may be located away from the marine vessel for instance in a computer cloud or external server.

In some embodiments, the processing device 10 may comprise a user interface 14 for interacting with a user U of the processing device. For instance, the processing device 10 may provide output 16 of information to the user U via the user interface 14 and/or the user U may provide input 17 of information to the processing device 10 via the user interface 14.

Additionally or alternatively, in some embodiments, the processing device 10 may comprise a communication interface 15 for interacting with other device(s), external to the processing device 10, e.g. with a control system 18 for controlling motion (e.g. propulsion, steering etc.) of the marine vessel 1. For instance, the processing device 10 may provide output 19 of information, e.g. of motion planning, to the control system 18 via the communication interface 15. The control system 18 may then use the outputted information for controlling the motion of the marine vessel. In some embodiments, the control system 18 may also provide input to the processing device 10 via the communication interface 15, e.g. feedback about the controlling of the motion of the marine vessel 10 resulting from information 19 about the motion planning provided to the control system.

Figure 3 illustrates some embodiments of the method of motion planning for the marine vessel 1. The motion planning may be part of path planning, global and/or local, and/or voyage planning for the marine vessel. The method may be performed by a processing device 10, e.g. as discussed above with reference to figure 2.

The method comprises obtaining S1 a planned future route for the marine vessel. In some embodiments, the planned route is a route for docking or undocking the marine vessel 1 in a harbour. Docking and undocking have been identified as situations where there may be a generally increased risk of discomfort to passengers or of cargo instability.

In some embodiments, the planned future route may result from path planning and/or voyage planning for the marine vessel, especially global or local path planning, e.g. also performed by the processing device 10 or by another processing device on the marine vessel 1, and in some embodiments the motion planning may be a subroutine for such path planning and/or voyage planning. In some embodiments, the motion planning may provide input to said path planning and/or voyage planning which in turn provides S1 an updated planned route to/in the processing device 10 in an iterative manner.

The method also comprises calculating S2 vessel position, heading and speed along the planned route of the marine vessel 1, e.g. at a plurality of waypoints along the planned route. The calculating S2 comprises minimizing (S3) the cost function:

$$Cost\ Function = w1 \times Discomfort + w2 \times Time + w3 \times Energy$$

where

Discomfort = 1/Comfort,

Time is the time it will take the marine vessel to complete the planned route,

Energy is the amount of energy, e.g. fuel, the marine vessel will consume to complete the planned route, and

w1, w2 and w3 are preset weights.

The weights w1, w2 and w3 in the cost function allow to find a suitable trade-off between maximization of passenger comfort/cargo stability and minimization of time and/or energy consumption during the process of motion planning.

For instance, if the route is e.g. a docking or undocking procedure, the user U may not care too much about the energy consumption, but wants to perform the procedure smoothly (emphasis on comfort) without taking too much time. The user may then set the weight w3 to a low number, e.g. 0.1, set the weight w1 to a relatively high number, e.g. 0.6, whereby the weight w2 is set to 0.3 (if the sum of the weights should be 1). The cost function with these set weights is then used when calculating the planned vessel position, heading and speed along the planned route during motion planning.

The Comfort or Discomfort is calculated as a function of acceleration (a) and jerk (j) in the surge and sway directions of the marine vessel 1 along the planned route. A constraint may be set of the Comfort/discomfort, e.g. that the Discomfort over the planned route should be below a preset soft or hard maximum, corresponding to that the Comfort over the planned route should be above a preset soft or hard minimum, or that the Comfort/Discomfort is within a preset range between a maximum and minimum. The comfort function, which could just as well be expressed as discomfort (since comfort and discomfort are the inverse of each other), may thus be written as

$$Comfort = f(a_{surge}, j_{surge}, a_{sway}, j_{sway})$$

As mentioned above, the planned route may be in the form of consecutive waypoints. In some embodiments, a hard upper limit may be set for the discomfort (or lower limit for the comfort), which limit should not be exceeded at any one of the waypoints, or which limit should not be exceeded at more than a preset number of the waypoints.

That the comfort or discomfort is within a preset range, or above/below a preset minimum/maximum (as discussed above) implies that the overall comfort is not planned to be lower than what is provided by the minimum or lower limit of the range even if e.g. the user U wants to prioritize time and/or energy in the cost function. Similarly, the higher limit of the range allows for also considering the time and/or energy in the cost function even if comfort is prioritized. The preset range, or minimum/maximum, may be preprogrammed or stored in the in the processing device 10, or given by the user U via the user interface 14. Preferably, it is stored in the storage 12 in the processing device 10. The range may be written as

$$Comfort_{min} \leq Comfort \leq Comfort_{max}$$

In some embodiments of the present invention, the method comprises receiving S4 input 17 from a user U, e.g. a captain of the vessel 1, via a user interface 14 of the processing device 10, e.g. a touch screen of a graphical user interface (GUI). The input 17 could for instance indicate whether any one or two of comfort, time and energy should be prioritized in the motion planning. Then, the method may also comprise setting S5 at least one of the weights w1, w2 and w3, e.g. w1, prior to the minimizing S3 of the cost function based on said received S4 input. For instance, if comfort is to be prioritized, the weight w1 of the cost function could be set relatively high compared to w2 and/or w3.

Additionally or alternatively, in some embodiments of the present invention, the method comprises outputting S6 information 19 and/or 16 about the calculated S2 vessel position, heading and/or speed, e.g. to the control system 18 of the marine vessel 1 via a communication interface 15, e.g. a transmitter or transceiver, of the processing device 10 and/or to the user U via a user interface 14, e.g. a GUI and/or speaker, of the processing device 10. The control system 18 and/or user U may then use the output S6 information for controlling the motion of the marine vessel 1.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method of motion planning for a marine vessel (1), the method being performed by a processing device (10) on the marine vessel, the method comprising:

   obtaining (S1) a planned future route for the marine vessel; and
   calculating (S2) vessel position, heading and speed along the planned route, including minimizing (S3) the cost function:

$$Cost\ Function = w1 \times Discomfort + w2 \times Time + w3 \times Energy$$

   where

   *Discomfort = 1/Comfort,*
   Time is the time it will take the marine vessel to complete the planned route,
   Energy is the amount of energy, e.g. fuel, the marine vessel will consume to complete the planned route, and
   w1, w2 and w3 are preset weights;

   wherein the Comfort is calculated as a function of acceleration and jerk in the surge and sway directions of the marine vessel (1) along the planned route and is above a preset minimum.

2. The method of claim 1, further comprising:

   receiving (S4) input (17) from a user (U) via a user interface (14) of the processing device (10); and
   setting (S5) at least one of the weights w1, w2 and w3, e.g. w1, prior to the minimizing (S3) of the cost function based on said received (S4) input.

3. The method of claim 1 or 2, further comprising:
   outputting (S6) information (19/16) about the calculated (S2) vessel position, heading and/or speed, e.g. to a control system (18) of the marine vessel (1) via a communication interface (15) of the processing device (10) and/or to a user (U) via a user interface (14) of the processing device (10).

4. The method of any preceding claim, wherein the planned route is a route for docking or undocking the marine vessel (1) in a harbour.

5. The method of any preceding claim, wherein the motion planning is part of path planning, e.g. global path planning or local path planning, for the marine vessel (1).

6. The method of any preceding claim, wherein the motion planning is part of voyage planning for the marine vessel (1).

7. A processing device (10) configured for motion planning for a marine vessel (1), the device comprising processing circuitry (11) and storage (12) storing instructions (13) executable by said processing circuitry whereby said device is operative to perform the method of any preceding claim.

8. A marine vessel (1) comprising the processing device (10) of claim 7.

9. A computer program product (12) comprising computer-executable components (13) for causing a processing device (10) to perform the method of any one of claims 1-6 when the computer-executable components are run on processing circuitry (11) comprised in the device.

Fig. 1

## 10 Processing Device

### 11 Processor

### 12 Storage

#### 13 SW

16

17

### 14 User Interface

### 15 Com. Interface

U

19

### 18 Control System

## Fig. 2

### S1 Obtaining Route

### S4 Receiving Input

### S5 Setting Weight

### S2 Calculating Speed

#### S3 Minimizing Cost Function

### S6 Outputting Speed Information

## Fig. 3

Europäisches
Patentamt

European
Patent Office

Office européen
des brevets

## EUROPEAN SEARCH REPORT

Application Number

EP 24 17 3257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/152613 A2 (FINCANTIERI CANTIERI NAVALI IT [IT]; BACICCHI GIORGIO [IT]) 18 December 2008 (2008-12-18) | 7,8 | INV.<br>B63B49/00<br>G01C21/20 |
| A | * paragraph [0099] - paragraph [0420]; figures 1-25 * | 1-6,9 | B63B79/40<br>B63B79/30 |
| X | EP 3 330 666 A1 (OFFSHORE NAVIGATION LTD [AI]) 6 June 2018 (2018-06-06) | 7,8 | |
| A | * paragraph [0012] - paragraph [0135]; figures 1-12 * | 1-6,9 | |
| X | US 2021/348926 A1 (DOKKEN SVERRE [MC] ET AL) 11 November 2021 (2021-11-11) | 7,8 | |
| A | * paragraph [0006] - paragraph [0095]; figures 1-13 * | 1-6,9 | |
| X | JP 2022 175993 A (TOKYO KEIKI INC) 25 November 2022 (2022-11-25) | 7,8 | |
| A | * paragraph [0005] - paragraph [0139]; figures 1-21 * | 1-6,9 | |

TECHNICAL FIELDS
SEARCHED (IPC)

B63B
G01C

The present search report has been drawn up for all claims

| Place of search | Date of completion of the search | Examiner |
|---|---|---|
| The Hague | 6 November 2024 | Martínez, Felipe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 17 3257

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2024

| Patent document cited in search report | | | Publication date | Patent family member(s) | | | Publication date |
|---|---|---|---|---|---|---|---|
| WO 2008152613 | A2 | | 18-12-2008 | AT | E508343 | T1 | 15-05-2011 |
| | | | | EP | 2167916 | A2 | 31-03-2010 |
| | | | | WO | 2008152613 | A2 | 18-12-2008 |
| EP 3330666 | A1 | | 06-06-2018 | DK | 3330747 | T3 | 28-10-2019 |
| | | | | EP | 3330171 | A2 | 06-06-2018 |
| | | | | EP | 3330666 | A1 | 06-06-2018 |
| | | | | EP | 3330747 | A1 | 06-06-2018 |
| | | | | EP | 3825651 | A1 | 26-05-2021 |
| US 2021348926 | A1 | | 11-11-2021 | EP | 3644014 | A1 | 29-04-2020 |
| | | | | JP | 7247334 | B2 | 28-03-2023 |
| | | | | JP | 2022518318 | A | 15-03-2022 |
| | | | | KR | 20210149023 | A | 08-12-2021 |
| | | | | SG | 11202103853R | A | 28-05-2021 |
| | | | | US | 2021348926 | A1 | 11-11-2021 |
| | | | | WO | 2020083686 | A1 | 30-04-2020 |
| JP 2022175993 | A | | 25-11-2022 | NONE | | | |

For more details about this annex : see Official Journal of the European Patent Office, No. 12/82